(19) Europäisches Patentamt

European Patent Office

Office européen des brevets

(11) Veröffentlichungsnummer: **0 281 738 B1**

(12) **EUROPÄISCHE PATENTSCHRIFT**

(45) Veröffentlichungstag der Patentschrift: **22.12.93**

(21) Anmeldenummer: **88100927.8**

(22) Anmeldetag: **22.01.88**

(51) Int. Cl.5: **H04L 5/06**

(54) **Vielträger-Demodulations-Verfahren.**

(30) Priorität: **12.03.87 DE 3707960**

(43) Veröffentlichungstag der Anmeldung:
**14.09.88 Patentblatt 88/37**

(45) Bekanntmachung des Hinweises auf die
Patenterteilung:
**22.12.93 Patentblatt 93/51**

(84) Benannte Vertragsstaaten:
**AT CH FR GB IT LI SE**

(56) Entgegenhaltungen:
**FR-A- 2 568 074**
**US-A- 4 020 288**

(73) Patentinhaber: **ANT Nachrichtentechnik GmbH**
**Gerberstrasse 33**
**D-71522 Backnang(DE)**

(72) Erfinder: **Göckler, Heinz, Dipl.-Ing.**
**Elbinger Strasse 52**
**D-7150 Backnang(DE)**
Erfinder: **Alberty, Thomas, Dipl.-Ing.**
**Danziger Strassse 28**
**D-7150 Backnang(DE)**

Rank Xerox (UK) Business Services
(3.10/3.6/3.3.1)

## Beschreibung

Die Erfindung bezieht sich auf ein Vielträger-Demodulations-Verfahren gemäß Oberbegriff des Anspruches 1.

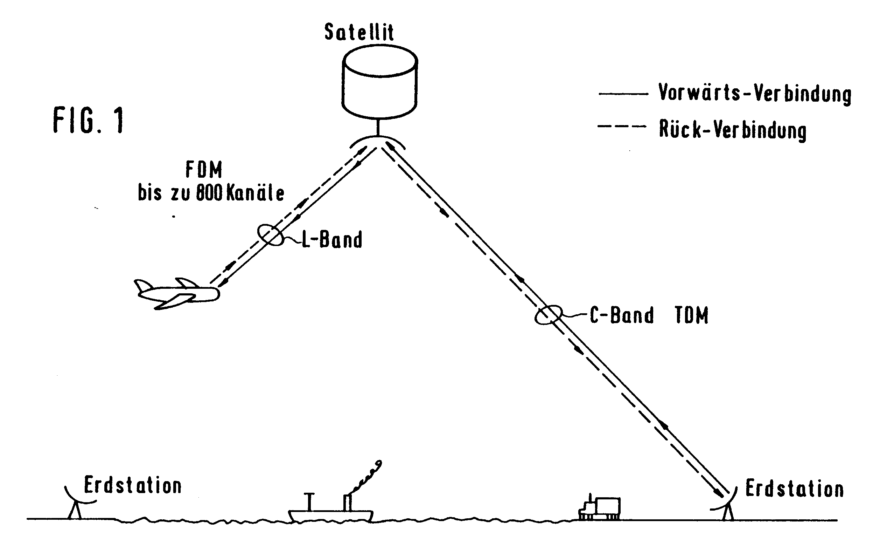

Ein solches Vielträger-Demodulations-Verfahren ist bekannt, beispielsweise durch die Studie "Multicarrier Demodulator Design" in Estec Contract 6069/84/NL/GM (SC) von Del Re und anderen, /1/ ; es soll in zukünftigen Satellitensystemen zum Einsatz kommen. Wie aus der Figur 1 entnehmbar ist, sollen Verkehrsteilnehmer wie Flugzeuge oder Schiffe, Eisenbahnen, Lastkraftwagen usw. über ein sogenanntes L-Band mit einem Satelliten in Verbindung stehen, welcher über ein sogenanntes C-Band mit einer Erdestation verbunden ist. Das L-Band ist in Frequenzmultiplex (FDM) für bis zu 800 Kanäle ausgelegt, während das C-Band in Zeitmultiplex (TDM) arbeitet. Damit können über die Erdestation zwischen festen und mobilen oder zwischen mobilen Teilnehmern Verbindungen aufgebaut werden. Der Vielträger-Demodulator soll das empfangene Frequenzmultiplex-Signal demultiplexen und in die einzelnen demodulierten zeitdiskreten Kanalsignale verarbeiten.

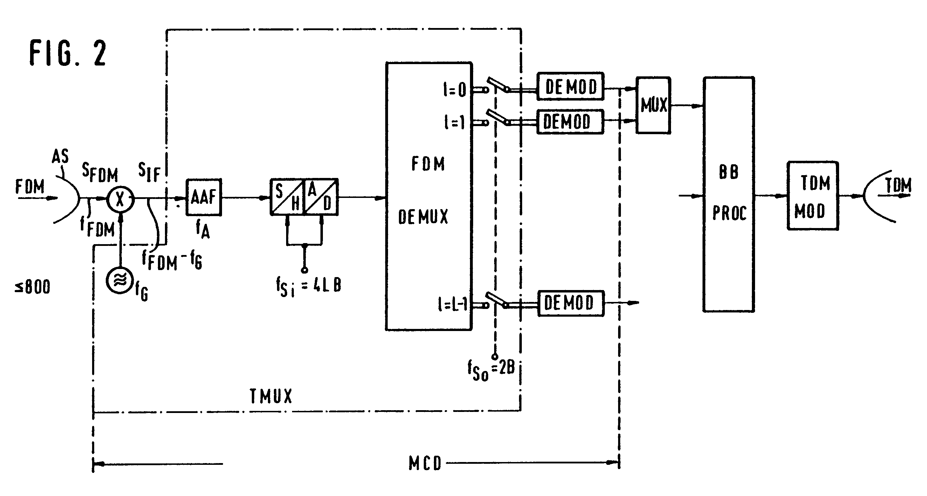

Ein Übersichts-Blockschaltbild gibt die Figur 2 wieder, in dem die Verarbeitungsgänge vom Empfang des FDM-Signals an der Antenne, der ersten Trägerumsetzung, Filterung mittels eines analogen Anti-Aliasingfilter AAF, der Abtastung und Analog/Digital-Wandlung A/D, Demultiplexen im FDM-DEMUX, Demodulation in den L Demodulatoren DEMOD und dem anschließenden Zusammenfassen der Multiplexer Mux, Breitbandmultiplexen und weitere Verarbeitung mittels TDM-Modulation und anschließendes Beaufschlagen der Sendeantenne erkennbar sind.

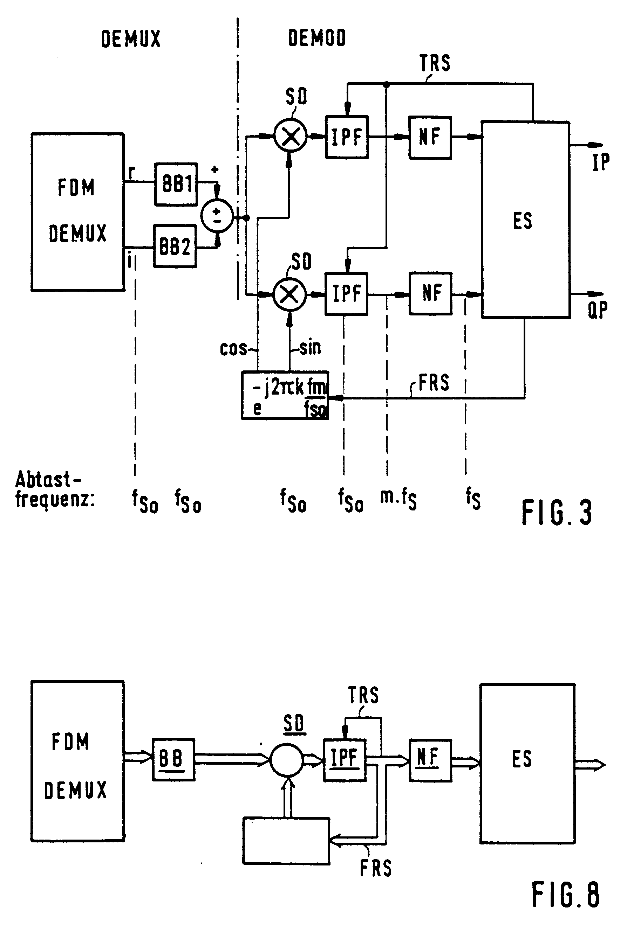

Für die im Satelliten ins Auge gefaßten Anwendungen bestehen die Eingangssignale der Demodulatoren DEMOD zumeist aus Datensignalen, welche an dieser Stelle noch in Form einer Quadratur-Amplitudenmodulation QAM (beispielsweise PSK, PSK/ASK) vorliegen. Eine günstige Realisierung eines solchen Demodulators DEMOD ist die, die eingegebene Folge von Abtastwerten in zwei Folgen zu zerlegen, nämlich in die sogenannte Normalkomponente (nachfolgend auch als Realteil eines komplexwertigen, von der Zeit abhängigen Signals interpretiert) und in die Quadraturkomponente (als Imaginärteil interpretiert). Eine solche Art digital realisierter Demodulator ist aus Figur 3 erkennbar, welcher den Stand der Technik nach der Literaturstelle /1/ wiedergibt.

Auch die FDM-Demultiplexer, FDM-DEMUX nach Figur 2, sind digital realisiert und damit in der Lage, L Ausgangssignale der einzelnen Kanäle als komplexes zeitabhängiges Signal, zerlegt in Normal- und Quadraturkomponente, abzugeben. Verfahren für solche digitale Demultiplexer wurden von Del Re und Fantacci in dem Aufsatz "Design of a Demultiplexer for a Regenerative Satellite" in Signal Processing III: Theories and Applications, in Elsevier Sience Publishers B.V. (North-Holland), Eurasip, 1986, Seiten 1095 - 1098 /3/ sowie von Göckler in der Potentanmeldung DE-A-36 10 195 /2/ angegeben.

Diese komplexe Verarbeitung ist in Figur 2 durch die Doppelstriche der Verbindungen zwischen DEMUX und DEMOD angedeutet.

Es folgt nun eine allgemeine Beschreibung der Verarbeitungsschritte, welche an der Schrittstelle zwischen DEMUX und DEMOD prinzipiell zu bewältigen sind. Gemäß Literaturstelle /3/ und /2/ wird die zur Abtastung und Digitalisierung des FDM-Eingangssignals des DEMUX erforderlich hohe Abtastfrequenz $f_{Si}$ = 4LB in Relation zu der Kanalzahl L auf eine Abtastfrequenz $f_{So}$ = 2B der einzelnen Ausgangssignale für die L Kanäle vermindert, welche Abtastfrequenz auf deren Bandbreite B angemessen ist. Das erwünschte Signalspektrum am DEMUX-Ausgang sollte in zentrierter Lage um eine Bandmittenfrequenz fm ungleich Null mit der Breite B vorliegen, wobei außerhalb noch unerwünschte und somit die Demodulation störende Spektralanteile durchaus noch vorhanden sein können. Vor dem eigentlichen Demodulationsvorgang muß demnach das komplexe DEMUX-Ausgangssignal

a) einer Bandbegrenzung (Filterung) unterworfen werden, welche die störenden Spektralanteile unterdrückt.

b) Für die Demodulation muß fm identisch = Null sein. Da dies im allgemeinen nicht gegeben ist, ist eine Vorrichtung zur Frequenzverschiebung des erwünschten Spektrums zur Frequenz fm = 0 hin vorzusehen, was gleichbedeutend ist mit Demodulation im engeren Sinne.

c) Der im Demodulator DEMOD zurückzugewinnende Datenstrom ist mit dem Schrittakt $f_S$ getaktet, wobei die Abtastfrequenz $f_{So}$ im allgemeinen kein ganzzahliges Vielfaches von $f_S$ ist. Da am Ausgang des Demodulators DEMOD die Daten aber mit der Schrittaktfrequenz $f_S$ zu übergeben sind, muß an geeigneter Stelle eine Anpassung von der Ausgangsimpuls-Abtastrate $f_{So}$ an den Schrittakt $f_S$ erfolgen. Dazu ist ein Interpolationsfilter erforderlich. Dieses Filter wird auch dann benötigt, wenn die Ausgangsabtastrate $f_{So}$ = m . $f_S$ mit m als ganzer Zahl ist, da im Demodulator DEMOD mit Hilfe einer Taktregelschleife der optimale Abtastzeitpunkt für einen nachfolgenden Entscheider zur Rückgewinnung der Daten gefunden werden muß. Dazu ist es im allgemeinen erforderlich, daß man durch Interpolation zwischen den vom Demultiplexer FDM-DEMUX im Zeitabstand $T_{So}$ = 1/$f_{So}$ abgeg-

ebenen Abtastwerte weitere Zwischenwerte ermittelt.

Schließlich ist es erforderlich, daß in jedem Demodulator für Datensignale ein Impulsformerfilter zur optimalen Unterdrückung des Rauschens der Übertragungsstrecke vorgesehen ist, welches Impulsformerfilter optimal auf das Sendesignal anzupassen ist (Nyquistfilter).

Gemäß Literaturstelle /3/ Figur 1 wird die Bandbegrenzung durch 2 Filter $G_I$ und $\overline{G}_I$ realisiert, denen die Filter BB1 und BB2 in Figur 3 entsprechen und deren Ausgangssignale addiert oder subtrahiert werden. Dadurch wird das ursprünglich komplexe Ausgangssignal des Demultiplexers DEMUX zwischenzeitlich auf ein reelles Signal reduziert, bevor es im nachfolgenden Synchrondemodulator (Frequenzregelschleife), siehe beispielsweise auch Figur 3 gemäß Literaturstelle /1/, wieder in Normal- und Quadraturkomponente (Real- bzw. Imaginärteil) zerlegt wird.

Der vorliegenden Erfindung lag die Aufgabe zugrunde, ein Vielträger-Demodulationsverfahren der eingangs genannten Art anzugeben, das in der Lage ist, bei vermindertem Gesamtaufwand bessere Systemeigenschaften zu bieten, als es nach dem Stande der Technik möglich ist.

Die Lösung erfolgt mit den gekennzeichneten Merkmalen gemäß Anspruch 1. Vorteilhafte Ausgestaltungen ergeben sich durch die Unteransprüche.

Durch das erfindungsgemäße Vielträger-Demodulationsverfahren ergeben sich wesentlich verbesserte Systemeigenschaften, wobei der Schaltungsaufwand zur Realisierung wesentlich verringert ist.

Es folgt nun die Beschreibung der Erfindung an Hand der Figuren.

Die Figuren 1 bis 3 zeigen den Stand der Technik und sind weiter oben schon beschrieben worden.

Die Figur 4 gibt die Grundstruktur eines Vielträger-Demodulators nach dem erfindungsgemäßen Verfahren wieder.

Die Figur 5 zeigt noch einmal die spektrale Darstellung einer bekannten Vielträger-Demodulator-Realisierung gemäß Figur 3, während die Figur 6 die spektrale Darstellung eines Vielträger-Demodulators nach dem erfindungsgemäßen Verfahren wiedergibt.

In Figur 7 ist das Blockschaltbild eines Realisierungsbeispiels für einen erfindungsgemäßen Vielträger-Demodulator nach dem erfindungsgemäßen Verfahren wiedergegeben.

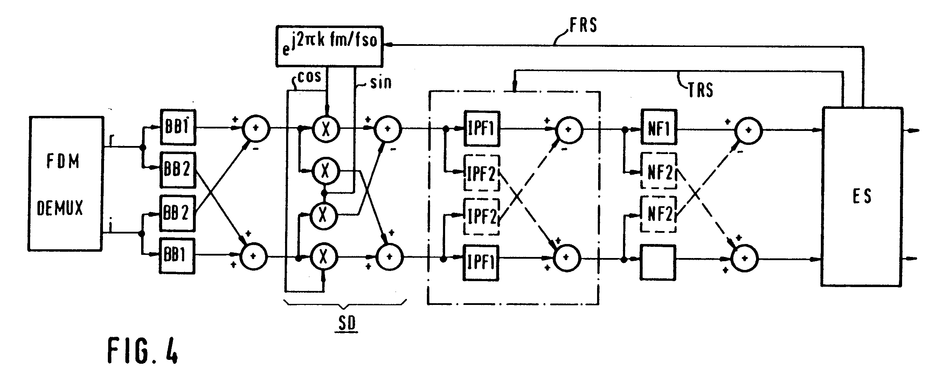

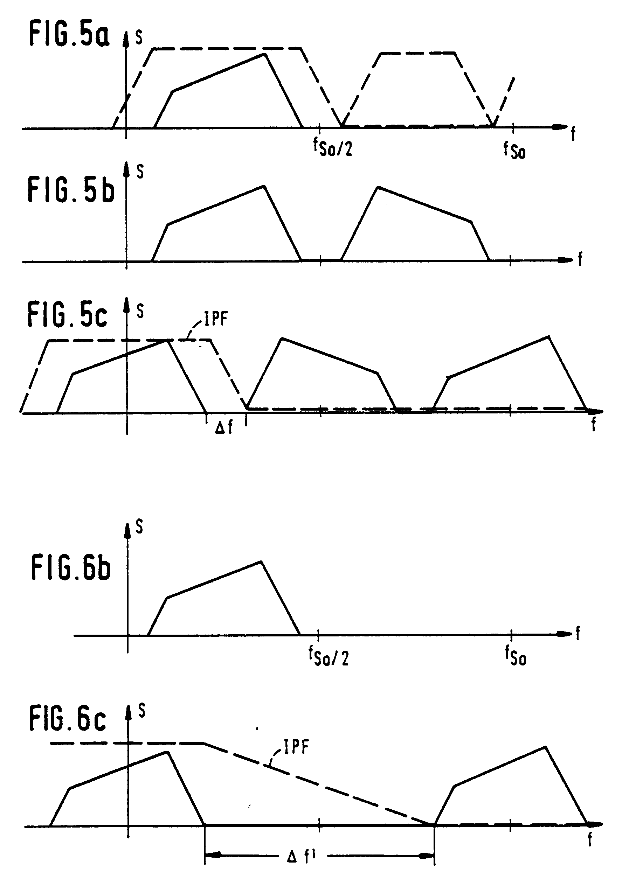

Ein vorteilhaftes Schaltungsbeispiel zur Durchführung des erfindungsgemäßen Verfahrens ist in Figur 4 angegeben. Anstelle des komplexen Filterpaars $G_I$ bzw. $\overline{G}_I$ gemäß Figur 1 der Literaturstelle /3/ bzw. der Filter BB1 und BB2 gemäß beiliegender Figur 3 tritt nun ein vollständiges komplexwertiges Filter $\overline{BB}$ mit BB1 und BB2 jeweils für den reellen und für den imaginären Signalanteil, wobei dieses vollständige Filter komplexe Koeffizienten aufweist (BB1 : Realteil, BB2 : Imaginärteil), d.h. im ungünstigsten Falle verdoppelt sich an dieser Stelle der Aufwand. Ebenfalls verdoppelt sich der Aufwand für den Synchrondemodulator, welcher Aufwand aber insgesamt zu vernachlässigen ist. Der Aufwand für das Interpolationsfilter IPF verringert sich aber gegenüber dem Vielträger-Demodulator gemäß Figur 3 drastisch. In beiden Fällen sei beispielsweise angenommen, daß die Demodulationsfrequenz gleich fm gewählt ist, weshalb nach der Synchrondemodulation die Filterfunktion IPF symmetrisch zu f = 0 wird und somit die Teilfilter IPF2 identisch verschwinden. Die Aufwandsverringerung ist aus dem Vergleich der spektralen Darstellungen nach Figur 5 und Figur 6 zu ersehen. Im erfindungsgemäßen Fall ist der Übergangsbereich Δf' der Interpolationsfilterfunktion IPF zwischen Durchlaß- und Sperrbereich gemäß Figur 6c sehr viel größer als Δf gemäß Figur 5c nach der Realisierung gemäß Figur 3 bzw. gemäß Literaturstelle /1/. Somit ist der Aufwand für das Interpolationsfilter IPF im erfindungsgemäßen Fall um den Faktor Δf/Δf' kleiner als bei dem Demodulator nach Literaturstelle /1/. Sofern, wie üblicherweise, Transversalfilter verwendet werden, drückt sich die Schaltungsreduzierung in der Filterlänge aus, wobei bei angenommener Filterlänge n der Realisierung gemäß Figur 3 nach Literaturstelle /1/ die Filterlänge n' der erfindungsgemäßen Lösung nach Figur 4 n' = n . Δf/Δf' wird, d.h. im angenommenen Fall der Figuren 5c und 6c ergibt sich eine Reduzierung der Filterlänge etwa um den Faktor 6.

Wird die Bandbegrenzung $\overline{BB}$ gemäß Figur 4 als Halbbandfilter mit komplexen Koeffizienten ausgebildet, beispielsweise nach Patentanmeldung DE-A-37 05 206, dann wird der Aufwand für die Bandbegrenzung $\overline{BB}$ praktisch gleich demjenigen wie bei Figur 3, sofern die Voraussetzungen $f_{S0}$ = 2B und $f_m \approx f_{S0}/4$ gilt.

Gemäß Kennzeichen des Anspruches 1 können die 4 Teilfunktionen für Filterung und Synchrondemodulation reihenfolgemäßig beliebig vertauscht werden. Die Funktionsblöcke, die vor der Synchrondemodulation SD liegen, weisen im allgemeinen Falle komplexe Koeffizienten auf, wodurch pro Teilfunktion 4 Blöcke, für Realzweig und Imaginärzweig je 2 Blöcke, zu realisieren sind. Für diejenigen Teilfunktionen, welche nach der Synchrondemodulation realisiert werden, sind nur jeweils 2 identische Blöcke insgesamt zu realisieren, ein Block jeweils für Realteil und Imaginärteil, aufgrund des von Null verschiedenen Realteils der Koeffizienten, deren Imaginärteil identisch gleich Null ist. Die in Figur 4 gestrichelten Blöcke entfallen damit.

Die Anordnung gemäß Figur 4 ist auch deshalb besonders günstig, weil das Nyquistfilter NF mit der Abtastfrequenz m . $f_S$ arbeitet, wobei m eine ganze Zahl und $f_S$ die Schrittfrequenz ist, und weil Takt- und Frequenzregelschleifen relativ kurze Laufzeitverzögerungen aufweisen, dies weil das Nyquistfilter relativ wenig Koeffizienten und Verzögerungsglieder aufweist.

Bei einer Anordnung zur Durchführung des Verfahrens gemäß Anspruch 7, bei der die Teilfunktionsynchrondemodulation vor den Filterfunktionen erfolgt, entfällt bei der Bandbegrenzungsfunktion BB jeweils der zweite Block BB2 und damit die Hälfte der aufwendigsten Teilfunktion. Falls die Bandbegrenzungsfunktion BB als Halbbandfilter realisiert wird, besteht der Teilblock BB2 lediglich aus einem Verzögerungsglied und einem Multiplizierer.

Bei dem Schaltungsbeispiel zur Durchführung des Verfahrens gemäß Anspruch 8, bei der die Interpolationsfunktion IPF als letzte Teilfunktion vor der Entscheiderfunktion durchgeführt wird, ist die Verzögerung in der Taktregelschleife minimal.

Bei einer Shaltungsanordnung zur Durchführung des Verfahrens gemäß Anspruch 9 erfolgt die Synchrondemodulation SD als letzte Teilfunktion nach den Filterfunktionen und hat damit den Vorteil einer minimalen Verzögerung in der Frequenzregelschleife.

Die Anordnung gemäß Figur 8, bzw. zur Durchführung des Verfahrens nach Anspruch 10 sieht eine Entnahme der Regelsignale für Takt- und Frequenzregelung am Ausgang des Interpolationsfilters IPF vor, womit noch kürzere Verzögerungszeiten innerhalb der Regelschleifen gegenüber der Regelsignalentnahme aus dem Entscheider gemäß Figur 4 erzielt werden.

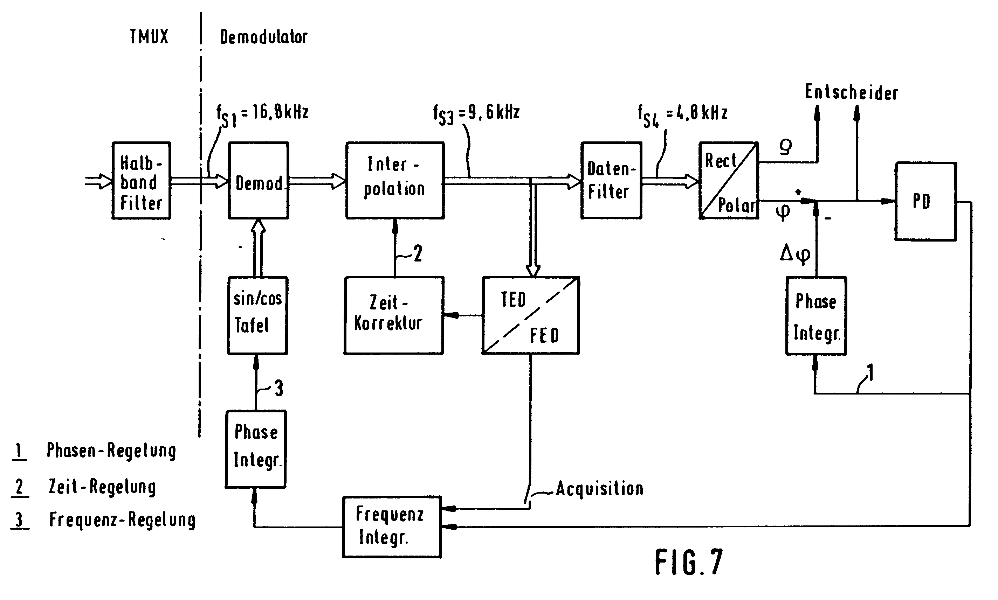

Die Figur 7 zeigt ein Blockschaltbild eines Ausführungsbeispiels für die Reihenfolge: Halbbandfilter für Bandbegrenzung, Synchrondemodulation, Interpolationsfilterung und Nyquistfilterung vor einer Entscheidung zusammen mit Regelschleifen für Phase, Takt und Frequenz.

**Patentansprüche**

1. Vielträger-Demodulations-Verfahren zum Auftrennen und zur Demodulation eines digitalisierten Frequenzmultiplexsignals in L einzelne Kanalsignale, wobei die Auftrennung in einem FDM-Demultiplexer erfolgt, in welchem die getrennten Kanalsignale mittels Bandbegrenzungsfilter gefiltert werden, und wobei die einzelnen Kanalsignale in einem Synchrondemodulator synchron demoduliert, mittels Interpolationsfilter und Nyquistfilter gefiltert und in einem sich anschließenden Entscheider entschieden werden, dadurch gekennzeichnet, daß dem Synchrondemodulator (SD) ein komplexes Kanalsignal zugeführt wird und daß die Interpolationsfilterung (IPF), die Nyquistfilterung (NF), die Bandbegrenzungsfilterung (BB) und die Synchrondemodulation (SD) in einer beliebigen Reihenfolge durchgeführt werden.

2. Vielträger-Demodulations-Verfahren nach Anspruch 1, dadurch gekennzeichnet, daß die Filterungsfunktion, die vor der Synchrondemodulation (SD) erfolgt, mit Filtern mit komplexen Koeffizienten durchgeführt wird.

3. Vielträger-Demodulations-Verfahren nach Anspruch 1 oder 2, dadurch gekennzeichnet, daß die Bandbegrenzung (BB) als Halbbandfilter mit komplexen Koeffizienten ausgeführt wird (Figur 2).

4. Vielträger-Demodulations-Verfahren nach Anspruch 1, 2 oder 3, dadurch gekennzeichnet, daß die Bandbegrenzung (BB) vor der Interpolationsfilterung (IPF) durchgeführt wird.

5. Vielträger-Demodulations-Verfahren nach einem der vorhergehenden Ansprüche, dadurch gekennzeichnet, daß kaskadierte Filterfunktionen zusammengefaßt werden zu einer Gesamtfunktion.

6. Vielträger-Demodulations-Verfahren nach einem der vorhergehenden Ansprüche, mit Frequenz- und Taktregelschleife, dadurch gekennzeichnet, daß Frequenzregel- und Taktregelschleifen kurze Laufzeiten aufweisen (Figur 8).

7. Vielträger-Demodulations-Verfahren nach einem der vorhergehenden Ansprüche, dadurch gekennzeichnet, daß die Synchrondemodulation (SD) vor der Bandbegrenzung (BB) und der Interpolationsfilterung (IPF) oder der Nyquistfilterung (NF) erfolgen.

8. Vielträger-Demodulations-Verfahren nach einem der Ansprüche 1 bis 6, dadurch gekennzeichnet, daß als erste Teilfunktion die Bandbegrenzungsfilterung (BB) oder die Synchrondemodulation (SD) erfolgen und anschließend die Synchrondemodulation (SD) oder die Nyquistfilterung (NF) und zum Schluß die Interpolationsfilterung (IPF) erfolgen.

9. Vielträger-Demodulations-Verfahren nach einem der Ansprüche 1 bis 6, dadurch gekennzeichnet, daß die Reihenfolge der Teilfunktionen mit Bandbegrenzung (BB), Nyquistfilterung (NF), Interpolationsfilterung (IPF) und Synchronisationsdemodulation (SD) eingehalten werden.

10. Vielträger-Demodulations-Verfahren nach einem der Ansprüche 1 bis 6, dadurch gekennzeichnet,
daß die Teilfunktionen in der Reihenfolge Bandbegrenzung (BB), Synchrondemodulation (SD), Interpolationsfilterung (IPF) und Nyquistfilterung (NF) erfolgen und daß am Ausgang des Interpolationsfilters (IPF) Regelsignale für eine Takt- und eine Frequenzregelung entnommen werden, wobei das Regelsignal für die Taktregelung zur Steuerung des Interpolationsfilters (IPF) und das Regelsignal für die Frequenzregelung dem Synchrondemodulator (SD) als Steuersignal zugeführt werden (Fig. 7, 8).

## Claims

1. A multicarrier demodulation method for the separation and demodulation of a digitalised frequency multiplex signal into L individual channel signals, with the separation taking place in an FDM demultiplexer in which the separated channel signals are filtered by means of bandwidth limitation filters and wherein the individual channel signals are synchronously demodulated in a synchronous demodulator, are filtered by means of interpolation filters and Nyquist filters and are decided upon in a connected decider, characterised in that
a complex channel signal is fed to the synchronous demodulator (SD); and
interpolation filtering (IPF), Nyquist filtering (NF), bandwidth limitation filtering (BB) and synchronous demodulation (SD) can be can be performed in any desired sequence.

2. A multicarrier demodulation method according to claim 1, characterised in that the filtering function taking place before the synchronous demodulation (SD) is effected by means of filters having complex coefficients.

3. A multicarrier demodulation method according to claim 1 or 2, characterised in that the bandwidth limitation (BB) is performed in the form of a half-band filter having complex-valued coefficients (Figure 2).

4. A multicarrier demodulation method according to claim 1, 2 or 3, characterised in that the bandwidth limitation (BB) is effected before the interpolation filtering (IPF).

5. A multicarrier demodulation method according to one of the preceding claims, characterised in that cascading filter functions are combined into one total function.

6. A multicarrier demodulation method according to one of the preceding claims including a frequency and clock pulse control loop, characterised in that the frequency control and clock pulse control loops have short delay times (Figure 8).

7. A multicarrier demodulation method according to one of the preceding claims, characterised in that the synchronous demodulation (SD) is effected before the bandwidth limitation (BB) and before the interpolation filtering (IPF) or the Nyquist filtering (NF).

8. A multicarrier demodulation method according to one of claims 1 to 6, characterised in that the first partial function performed is bandwidth limitation filtering (BB) or synchronous demodulation (SD), followed by synchronous demodulation (SD) or Nyquist filtering (NF) and finally by interpolation filtering (IPF).

9. A multicarrier demodulation method according to one of claims 1 to 6, characterised in that the partial function sequence of bandwidth limitation (BB), Nyquist filtering (NF), interpolation filtering (IPF) and synchronisation demodulation (SD) is adhered to.

10. A multicarrier demodulation method according to one of claims 1 to 6, characterised in that the partial functions are performed in the sequence of bandwidth limitation (BB), synchronous demodulation (SD), interpolation filtering (IPF) and Nyquist filtering (NF) and control signals for clock pulse and frequency control are obtained at the output of the interpolation filter (IPF), with the control signal for the clock pulse to control the interpolation filter (IPF) and the control signal for the frequency being fed as control signal to the synchronous demodulator (SD) (Figures 7, 8).

## Revendications

1. Procédé de démodulation de porteuses multiples, pour la séparation et la démodulation d'un signal numérisé, multiplexé en fréquence en L signaux de canaux individuels, la séparation s'effectuant dans un démultiplexeur FDM, dans lequel les signaux séparés sont filtrés au moyen de filtres de limitation de bande, et les signaux individuels sont démodulés en mode synchrone dans un démodulateur synchrone, filtrés au moyen de filtre(s) d'interpolation, de filtre(s) de Nyquist et font l'objet d'une décision dans un organe décideur suivant, caractérisé

par le fait qu'on amène au démodulateur synchrone (SD) un signal complexe de canal, et

par le fait que l'on exécute le filtrage d'interpolation (IPF), le filtrage de Nyquist (NF), le filtrage de limitation de bande (BB) et la démodulation synchrone (SD) dans un ordre quelconque désiré.

2. Procédé de démodulation de porteuses multiples selon revendication 1, caractérisé, par le fait que la fonction de filtrage, qui est mise en oeuvre avant la démodulation synchrone (SD), est exécutée avec des filtres à coefficients complexes.

3. Procédé de démodulation de porteuses multiples, caractérisé par le fait que la limitation de bande (BB) est réalisée sous forme de filtre demi-bande à coefficients complexes (figure 2).

4. Procédé de démodulation de porteuses multiples selon revendication 1, 2 ou 3, caractérisé par le fait que la limitation de bande (BB) est exécutée avant le filtrage d'interpolation (IPF).

5. Procédé de démodulation de porteuses multiples selon l'une des revendications précédentes, caractérisé par le fait que les fonctions de filtrage en cascade sont regroupées en une fonction d'ensemble.

6. Procédé de démodulation de porteuses multiples selon l'une des revendications précédentes, avec boucle de régulation de fréquence et de rythme, caractérisé par le fait que des boucles de régulation de fréquence et de rythme présentent des temps de transit courts (figure 8).

7. Procédé de démodulation de porteuses multiples selon l'une des revendications précédentes, caractérisé par le fait que la démodulation synchrone (SD) est effectuée avant la limitation de bande (BB) et le filtrage d'interpolation (IPF) ou le filtrage de Nyquist (NF).

8. Procédé de démodulation de porteuses multiples selon l'une des revendications 1 à 6, caractérisé

par le fait qu'en tant que première fonction partielle on exécute le filtrage de limitation de bande (BB) ou la démodulation synchrone (SD), puis la démodulation synchrone (SD) ou le filtrage de Nyquist (NF) et finalement le filtrage d'interpolation (IPF).

9. Procédé de démodulation de porteuses multiples selon l'une des revendications 1 à 6, caractérisé par le fait que l'on respecte l'ordre de succession des fonctions partielles avec limitation de bande (BB), filtrage de Nyquist (NF), filtrage d'interpolation (IPF) et démodulation synchrone (SD).

10. Procédé de démodulation de porteuses multiples selon l'une des revendications 1 à 6, caractérisé par le fait que les fonctions partielles s'effectuent dans l'ordre de succession limitation de bande (BB), démodulation synchrone (SD), filtrage d'interpolation (IPF) et filtrage de Nyquist (NF), et par le fait qu'à la sortie du filtre d'interpolation (IPF) on prélève des signaux de régulation pour une régulation de rythme et de fréquence, le signal de régulation pour la régulation de rythme étant envoyé en tant que signal de commande pour commander le filtre d'interpolation (IPF), et le signal de régulation pour la régulation de fréquence étant envoyé, en tant que signal de commande au démodulateur synchrone (SD) (figures 7, 8).

FIG. 1

Satellit

FDM
bis zu 800 Kanäle

L-Band

C-Band TOM

———— Vorwärts-Verbindung
————  Rück-Verbindung

Erdstation

Erdstation

EP 0 281 738 B1

# FIG. 2

FDM — AS — $S_{FDM}$ — $S_{IF}$

$f_{FDM}$

$f_{FDM} - f_G$

$f_G$

$\leq 800$

$f_A$ — AAF

S/H — A/D

$f_{Si} = 4LB$

FDM DEMUX

$l=0$

$l=1$

$l=L-1$

DEMOD

DEMOD

DEMOD

MUX

$f_{So} = 2B$

BB PROC

TDM MOD

TDM

TMUX

MCD

EP 0 281 738 B1

EP 0 281 738 B1

FIG.3

FIG.8

9

FIG. 4

FIG.5a

FIG.5b

FIG.5c

FIG.6b

FIG.6c

FIG.7

EP 0 281 738 B1